# EUROPÄISCHE PATENTSCHRIFT

(11) **EP 2 441 555 B1**
(45) Veröffentlichungstag und Bekanntmachung des Hinweises auf die Patenterteilung: **03.07.2013**
(21) Anmeldenummer: 10187736.3
(22) Anmeldetag: 15.10.2010
(51) Int. Cl.: B29B 17/02

(54) **Verfahren zur Aufbereitung von Gummigranulaten oder Gummipulvern**
Method for manufacturing rubber granulates or rubber powders
Procédé de préparation de granulés de caoutchouc ou de poudre de caoutchouc

(43) Veröffentlichungstag der Anmeldung: 18.04.2012
(73) Patentinhaber: Continental Reifen Deutschland GmbH, 30165 Hannover (DE)
(72) Erfinder: Theusner, Martin, Dr., 30989, Gehrden (DE)
(74) Vertreter: Finger, Karsten

(56) Entgegenhaltungen:
- WO-A1-92/22409
- WO-A2-94/07670
- DE-B- 1 244 387
- US-A- 1 195 264
- US-A- 2 462 645
- US-A- 4 352 735

## Beschreibung

Die Erfindung betrifft ein Verfahren zur Aufbereitung von unterschiedliche Kautschuktypen enthaltenden Gummigranulaten oder Gummipulvern sowie die Verwendung des nach dem Verfahren aufbereiteten Gummigranulats oder Gummipulvers.

Als Aufbereitung wird dabei die Behandlung von Stoffen oder Stoffgemischen bezeichnet, die im Allgemeinen der Anreicherung erwünschter Komponenten dient. Aufbereitungsverfahren sind daher im Allgemeinen Trennverfahren.

Jährlich fallen weltweit viele Millionen Tonnen an Altreifen an, ca. 25 % davon sind Nutzfahrzeugreifen. Allein in Europa fallen ca. 3,2 Mio. Tonnen Altreifen pro Jahr an, wobei der Anteil an Nutzfahrzeug-altreifen bei ca. 0,8 Mio. liegt. Ein großer Teil der Altreifen wird in der Zementindustrie einer energetischen Nutzung zugeführt und steht damit bei zunehmender Rohstoffknappheit einer weiteren stofflichen Nutzung nicht mehr zur Verfügung.

Bisher gibt es nur sehr eingeschränkte Möglichkeiten einer stofflichen Nutzung von Altreifenmaterial in Form von Granulat oder Pulver in Mischungen für Neureifen. Die wichtigste stoffliche Nutzung ist der Einsatz des aus Altreifen hergestellten Gummigranulats oder Gummipulvers, auch Gummimehl genannt, verschiedener Korngrößen in Gummimatten oder anderen dynamisch nicht belasteten Gummiprodukten.

Bei der Herstellung von Gummigranulat oder Gummipulver aus Nutzfahrzeugreifen gibt es grundsätzlich zwei unterschiedliche Produkte:
Als erstes Produkt ist das Ganzreifengranulat/-mehl zu nennen. Es enthält, da der gesamte Reifen granuliert/gemahlen wird, sämtliche Reifenmischungen eines Reifens von der inneren luftdichten butyl- oder halobutylhaltigen Innenseelenmischung bis hin zur Lauffläche aus Naturkautschuk. Alle Reifen haben, um die Luftdruck im Reifen über lange Zeit konstant zu halten, eine Innenseelenmischung, die vorwiegend Butyl-, Chlor- oder Brombutyl-Kautschuk als Kautschuk enthält. Wird der gesamte Reifen zerkleinert und gemahlen, enthält das Granulat bzw. Pulver auch stets die Innenseelenmischung. Von diesem Material werden große Mengen auf dem Markt angeboten und zum Teil in Asphalt als Füllstoff eingesetzt.

In der US 1,195,264 wird ein Verfahren zur Trennung von Gummigranulaten in einem Absetzbad mit einer öligen Substanz an der Badoberfläche beschrieben. Die Trennung erfolgt über die unterschiedlichen Dichten der Gummigranulate.

Über die unterschiedlichen Dichten von Gummipartikeln erfolgt auch die Aufbereitung von Gummipartikeln in der US 2,462,645. Hier erfolgt die Trennung durch Anblasen der trockenen Partikel mit Luft.

Ein weiteres, in sehr begrenztem Maße hergestelltes Reifengranulat/-mehl besteht aus abgeschälten Laufflächen und Seitenwänden von runderneuerten Nutzfahrzeugreifen. Dieses Material besteht fast ausschließlich aus Naturkautschuk.

Die bekannten Gummigranulate oder Gummipulver aus Nutzfahrzeugreifen können in geringen Mengen frisch hergestellten Reifenmischungen in der Reifenproduktion als Zuschlagstoff zugesetzt werden. Ihr Einsatz ist aber in der Menge sehr stark beschränkt, da die Reifengranulatpartikel in der frischen Reifenmischung wie kleine Fremdkörper wirken. Ursache für dieses Verhalten ist unter anderem, dass Festigkeit und Dehnung des Altreifengranulates deutlich von denen der Frischmischung nach der Vulkanisation in der Reifenmischung abweichen. Die Reifengranulatpartikel werden bei der Vulkanisation im neuen Produkt dann zum zweiten Mal vulkanisiert. Die erste Vulkanisation des Reifengranulates wurde bereits im Altreifen, dem Ausgangsmaterial für das Reifengranulat, durchgeführt. Die nun zum zweiten Mal vulkanisierten Altreifenpartikel zeigen an der Grenzfläche zur frischen Reifenmischung einen Unterschied im Festigkeits-/Dehnungsverhalten, was die dynamische Leistungsfähigkeit nachteilig beeinflussen kann. In vielen Gummiprodukten, die dynamisch nicht belastet werden, wie z. B. Gummimatten, Ständer für mobile Verkehrsschilder an Baustellen oder schräge Bordsteinauffahrten, kann Reifengranulat oder auch Granulat aus anderen Gummiprodukten den Frischmischungen zugesetzt werden, da in diesem Fall keine dynamische Beanspruchung wie im Reifen vorliegt.

Um Altreifengranulat dennoch für den Einsatz in Reifen hochwertig nutzen zu können, ist es bekannt und üblich dieses zu regenerieren. In einem Regenerierprozess wird das vulkanisierte Reifengranulat plastifiziert, d.h. es wird vom elastischen Zustand in einen plastischen Zustand überführt, indem die Kautschukketten sowie die durch die Vulkanisation gebildeten Schwefelbrücken abgebaut werden.

Es sind zahlreiche Verfahren zum Regenerieren oder Devulkanisieren von vulkanisiertem Reifengranulat/-mehl in der Anwendung. Alle Verfahren haben zum Ziel, dass die Vernetzungsstruktur regeneriert, d.h. aufgespalten, wird. Durch die Einwirkung von thermischer und mechanischer Energie auf Walzwerken oder in Mischern sowie unter Zuhilfenahme von unterschiedlichen polymerketten- und schwefelbrückenabbauenden Chemikalien werden die Moleküle des vulkanisierten Altreifengranulats/-mehls depolymerisiert sowie auch Schwefelbrücken abgebaut. Dieser Vorgang wird allgemein als Regeneration bezeichnet.

Das bei den Prozessen entstehende, nun plastische Produkt mit einer definierten Viskosität ist als Regenerat für vielfältige Zusätze zu Reifen- und technischen Gummimischungen am Markt erhältlich und zeigt die negativen Eigenschaften von nicht regeneriertem Reifengranulat/-mehl in dynamisch belasteten Produkten in deutlich verringertem Maße.

Nachteilig wirken sich allerdings immer noch die vorhandenen Butyl-, Chlor- oder Brombutylkautschukanteile im Granulat bzw. Pulver aus.

Diese Butyl-, Chlor- oder Brombutylkautschukgranulate zeigen auf Grund ihrer molekularen Struktur eine Unverträglichkeit beim Vermischen/Verschneiden mit Naturkautschuk und anderen Kautschuktypen in frisch hergestellten Mischungen aus Natur- und Synthesekautschuken. Sie bilden Domänen unverteilten Butyl- und Halobutylkautschuks. Wie Untersuchungen und Erfahrungen aus der Reifenindustrie zeigen, wirken diese Kautschuktypen wie eine Trennschicht in der Mischung, die zu deutlichen Minderleistungen im Produkt führen können. Diese Kautschuke lassen sich in Mischungen mit anderen Kautschuken, wie z.B. Naturkautschuk. sehr schlecht homogenisieren und führen auf Grund ihrer chemischen Konstitution zu einer schlechten Einbindung in Frischmischungen.

Dieses nachteilige Verhalten der Mischungen mit Butyl- und Halobutylkautschuk, wie z. B. der Innenseelenmischungen, ist in der Reifenindustrie hinlänglich bekannt und begrenzt den Einsatz von Regenerat aus Gummigranulat oder Gummipulver aus ganzen Nutzfahrzeugreifen als wertvollem Mischungszusatz erheblich. Ein erheblich größerer Einsatz von naturkautschukhaltigem Regenerat aus Nutzfahrzeugganzreifengranulat/-mehl wäre daher möglich, wenn die Anteile der Butyl-, Chlor- oder Brombutylkautschuke aus dem Material vor dem Regenerierprozess reduziert werden könnten.

Auch bei Gummigranulaten und Gummipulvern, die aus anderen Altgummiprodukten als Reifen hergestellt werden, kann es bei Vorhandensein mehrerer Kautschuktypen im Gummiprodukt zu Unverträglichkeiten bei der Wiederverwertung kommen.

Der Erfindung liegt daher die Aufgabe zu Grunde, ein einfaches und effizientes Verfahren zur Aufbereitung von unterschiedliche Kautschuktypen enthaltenden Gummigranulaten oder Gummipulvern bereit zu stellen. Bei dem Verfahren sollen Gummigranulate oder Gummipulver aus Kautschukmischungen mit unterschiedlichen Kautschuktypen getrennt werden.

Gelöst wird die Aufgabe erfindungsgemäß dadurch, dass die Aufbereitung mittels Flotation erfolgt.

Überraschenderweise konnte festgestellt werden, dass Gummigranulate oder Gummipulver, deren Partikel auf unterschiedlichen Kautschuktypen basieren, sich durch das einfache Verfahren der Flotation trennen lassen.

Flotation ist dabei das auch als Schwimmaufbereitung bezeichnete Trennverfahren zur Aufbereitung von gemahlenen, feinkörnigen und granulatartigen Feststoffen aufgrund der unterschiedlichen Oberflächenbenetzbarkeit der Granulate/Partikel. Dabei macht man sich zunutze, dass sich Luftblasen leichter an einige Granulate/Partikel anlagern als andere und den Partikeln in der Suspension einen Auftrieb verleihen. Partikel, an die sich keine Blasen anlagern, sinken in der sogenannten Flotationszelle zu Boden. An den Grenzflächen spielen Phänomene der Adhäsion, z. B. der elektrochemischen Doppelschicht und van der Waals'sche Kräfte, eine Rolle, durch die die Haftung der Blasen an der Oberfläche der Feststoffe beeinflußt werden. Liegen Granulate vor, die innerhalb eines Partikels mehrere Kautschuktypen enthalten, wirkt der Kautschuk im Hinblick auf die Oberflächenbenetzbarkeit dominierend, welcher einen größeren Flächenanteil für die Anlagerung der Blasen bietet.

Die Flotation ist bekannt aus der Aufbereitung von Erzen, Kohle, Salzen oder Abwässern. In der EP 1 031 440 A2 und der US 6,655,167 B2 wird sie im Zusammenhang mit dem Recycling von Gummiabfällen zur Abtrennung von metallischen und textilen Festigkeitsträgern von Gummi genannt. Die Trennung unterschiedlichen Kautschuktypen findet dort keine Erwähnung.

Die nach dem Verfahren erhaltenen aufbereiteten Gummigranulate oder Gummipulver eröffnen die Möglichkeit, die wertvollen Rohstoffe aus Altgummiprodukten wiederverwenden zu können. Gleichzeitig wird ein erheblicher Beitrag zum Umweltschutz geleistet, da die abgetrennten Kautschuktypen effektiver und langfristig mehrmals genutzt werden können. Die Verbrennung von wertvollen Altgummiprodukten kann somit umgangen werden.

Bevorzugt lässt sich das erfindungsgemäße Verfahren zur Aufbereitung von Gummigranulat oder Gummipulver einsetzen, welches Naturkautschuk und Butylkautschuk (IIR) bzw. Halobutylkautschuk (XIIR) enthält. Bei den Halobutylkautschuken handelt es sich insbesondere um Brombutyl- oder Chlorbutylkautschuk. Diese Kautschuktypen lassen sich mit dem erfindungsgemäßen Verfahren gut voneinander trennen, was zum einen in einer mikroskopisch beobachteten höheren Oberflächenrauigkeit der naturkautschukhaltigen Granulate im Vergleich zu den butylkautschukhaltigen Granulaten und zum anderen in einer unterschiedlichen chemischen Konstitution der Kautschuke begründet sein könnte. Es zeigte sich, dass die naturkautschukhaltigen Partikel ein intensives, selektives Anlagern von Luftblasen zeigen und bei der Flotation aufschwimmen, während die butylkautschukhaltigen Partikel keine oder kaum Luftblasen anlagern und daher nicht aufschwimmen.

Die Trennung von Naturkautschuk und Butylkautschuk (IIR) bzw. Halobutylkautschuk (XIIR), die untereinander Unverträglichkeiten aufweisen, wird somit ermöglicht. Bisher konnte Granulat, welches wenig oder gar keinen Butyl-/Halobutylkautschuk aufweist in nur geringen Mengen aus Nutzfahrzeugaltreifen bei der Runderneuerung durch Abschälen der Laufflächen und/oder der Seitenwand (Naturkautschukmischungen) erzeugt werden. Es wird nun erfindungsgemäß möglich, großindustriell butyl-/halogenbutylkautschukfreies/- armes Gummigranulat oder Gummipulver, beispielsweise aus Nutzfahrzeugreifen-Ganzgranulat, als Ausgangsmaterial für einen Regenerierprozess zu erzeugen und dann für weitere Gummiprodukte zu verwenden.

Das abgetrennte Butyl- bzw. Halobutylkautschukgranulat kann ebenfalls einem Regenerierprozeß unterzogen werden und als Regenerat in der Frischmischungen beispielsweise in der Reifenproduktion zum Einsatz kommen.

Dies schont die jetzt schon begrenzten Naturkautschuk-Ressourcen, aber auch die des abgetrennten Butyl-/Halobutylkautschuks. Zudem wird der teure und umweltbelastende Transport von Naturkautschuk aus Südost-Asien reduziert.

Das erfindungsgemäße Verfahren kann mit Gummigranulat oder Gummipulver aus unterschiedlichsten Gummiprodukten durchgeführt werden. Gemäß einer bevorzugten Weiterbildung der Erfindung wurde das Gummigranulat oder das Gummipulver durch Zerkleinern von ganzen Altreifen erhalten. Die weltweit anfallenden Altreifen können auf diese Weise einer umwelt- und ressourcenschonenden Wiederverwertung zugeführt werden. Ein mechanisches Entfernen der Innenseelenmischung aus Altreifen, z. B. durch Herausfräsen, ist nicht nötig, da die verschiedenen Kautschuktypen des Reifens, die bei der weiteren Verwertung störend wirken können, durch das erfindungsgemäße Verfahren getrennt werden können.

Das erfindungsgemäße Verfahren bietet zusätzlich die Möglichkeit, die bei der Granulierung von Altreifen von Metallabscheidern vorab nicht abgetrennten Stahlcordbruchstücke in den Flotationszellen mit abzutrennen. Das nicht aufschäumende Granulat kann anschließend auch nochmals über einen Metallabscheider zur Abscheidung der ggf. vorhandenen Stahlcordbruchstücke gegeben werden. Hierdurch wird ein besonders hochwertiges Granulat, beispielsweise ein Butylkautschukgranulat, für einen anschließenden Regenerierprozess erhalten. Das Material wird für einen weiteren Einsatz in Kautschukmischungen verbessert.

Als Altreifen können PKW-Reifen eingesetzt werden. Vorzugsweise werden jedoch Nutzfahrzeugaltreifen (LKW-Altreifen) eingesetzt, diese werden in Großmahlanlagen zu Granulaten und Mehlen unterschiedlichster Korngröße gemahlen und in großen Mengen auf dem Markt angeboten. Das Granulat oder Pulver von Nutzfahrzeugaltreifen eignet sich besonders für das erfindungsgemäße Verfahren, da bei Nutzfahrzeugaltreifen in der Regel die Lauffläche und ggf. andere Reifenbauteile - mit Ausnahme der Innenseele - zu nahezu 100 % auf Naturkautschuk basieren und die Innenseele auf Butyl-/Halobutylkautschuk basiert und sich diese Kautschuktypen besonders gut gemäß der Erfindung trennen lassen.

Gemäß einer vorteilhaften Weiterbildung der Erfindung weist das Gummigranulat oder Gummipulver eine Korngröße von 50 bis 3 mesh, entsprechend einer Maschenweite der Siebe von 0,3 bis 6,73 mm, auf. Vorteilhaft ist, wenn es bei dem aufzubereitenden Material nicht zu einer mechanischen Verklammerung von Blasen auf Grund der Struktur der Partikel kommt, sondern die Anlagerung der Blasen auf Grund der unterschiedlichen Grenzflächenspannungen erfolgt.

Das erfindungsgemäße Verfahren kann z. B. Rührwerkzellen durchgeführt werden, wobei die Zellen dann als Flotationszellen bezeichnet werden.

Die Aufbereitung erfolgt vorzugsweise in zumindest einer Flotationszelle. Es ist jedoch auch möglich, mehrere Flotationszellen hintereinander zu schalten, um die Trennung des Gummigranulates oder Gummipulvers weiter zu verbessern.

Als Medium zur Suspendierung des Gummigranulates oder Gummipulvers bei der Flotation können unterschiedliche Flüssigkeiten zum Einsatz kommen. Vorzugsweise wird für die Flotation das Gummigranulat oder Gummipulver in Wasser als umweltfreundlichem Medium suspendiert. In diesem Medium lassen sich die Gummigranulate oder Gummipulver mit unterschiedlichen Kautschuktypen gut aufbereiten.

Für die Flotation können als Gase unterschiedlichste Gase eingesetzt werden. Besonders preiswert und einfach ist jedoch der Einsatz von Luft als Gas für die Flotation.

Die Benetzbarkeit der zu trennenden Partikel lässt sich durch Zusätze von Flotationsmitteln beeinflussen. Unter Flotationsmitteln versteht man Chemikalien, die entweder die Benetzbarkeit der verschiedenen Materialoberflächen verbessern (sogenannte Sammler oder Kollektoren), ihre Selektivität steuern (Schwimmmittel, nämlich sogenannte Drücker, Beleber, pH-Wert-Regler, Dispergier- und Flockungsmittel) oder die Schaumbildung bewirken oder verbessern (Schäumer). Als Schäumer können beispielsweise herkömmliche Tenside eingesetzt werden.

Werden mehrere Flotationszellen hintereinander geschaltet, können Flotationszellen mit und ohne Flotationsmittel kombiniert werden.

Um das aufbereitete Gummigranulat oder Gummipulver für die weitere Verarbeitung oder den Transport vorzubereiten, hat es sich als vorteilhaft erweisen, wenn es beispielsweise mit einem Warmluftgebläse getrocknet wird.

Das aufbereitete Gummigranulat oder Gummipulver kann vor einem weiteren Einsatz bzw. vor der Regeneration weiter zerkleinert oder gemahlen werden.

Das aufbereitete und getrocknete Gummigranulat oder Gummipulver wird zur Verbesserung seiner Eigenschaften beim erneuten Einsatz in zu vulkanisierenden Gummiprodukten vorzugsweise regeneriert. Dies kann durch Einwirkung von thermischer und mechanischer Energie auf Walzwerken oder in Mischern sowie unter Zuhilfenahme von unterschiedlichen polymerketten- oder schwefelbrückenabbauenden Chemikalien erfolgen.

Das aufbereitete Gummigranulat oder Gummipulver kann sowohl in roher Form als auch in regenerierter Form als Zuschlagstoff für Kautschukmischungen für unterschiedlichste auch technische Gummiprodukte, wie Gummimatten, Fördergurte, Schuhsohlen oder Schläuche, eingesetzt werden. Vorzugsweise wird es in Reifenkautschukmischungen eingesetzt.

Die Erfindung soll nun anhand von Ausführungsbeispielen im Zusammenhang mit den

Figuren näher erläutert werden. Dabei zeigt:
- Fig. 1: schematisch die Anlagerung von Luftblasen an hydrophobes Altreifengranulat von Nutzfahrzeugreifen
- Fig. 2: schematisch eine Flotationszelle mit Perlator zur Aufbereitung von Gummigranulat
- Fig. 3: ein IR-Spektrum vom Nutzfahrzeug-Ganzreifengranulat als Ausgangsmaterial
- Fig. 4: ein IR-Spektrum von in der Flotationszelle verbliebenem Granulat
- Fig. 5: ein IR-Spektrum vom ausgeschäumten Granulat
- Fig. 6: schematisch eine Flotationszelle mit eingedüstem, lufthaltigem Wasserstrahl zur Aufbereitung von Gummigranulat

Es wurden Versuche in unterschiedlichen Flotationszellen mit Partikeln aus Naturkautschuk und Butyl-/Halobutylkautschuk unter unterschiedlichen Bedingungen mit Luft als Flotationsgas im Suspensionsmedium Wasser durchgeführt.

Bei allen Versuchen ergab sich, dass einige Partikel die Luftblasen anlagern und aufschäumen, während andere Partikel keine Luftblasen anlagerten und auf dem Boden der Flotationszellen verblieben.

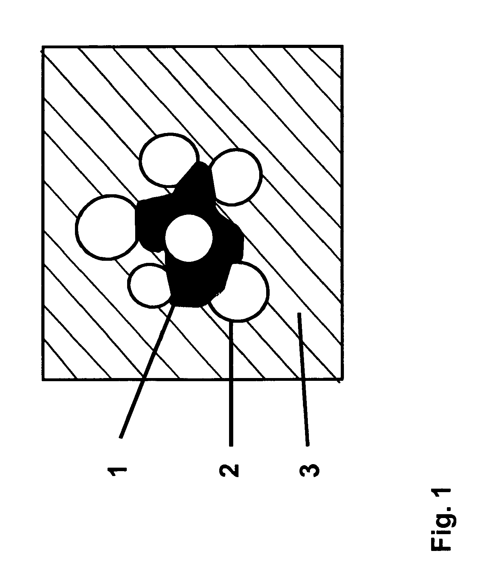

Fig. 1 zeigt vergrößert ein Altreifengranulatpartikel 1 mit angelagerten Luftblasen 2 im Suspensionsmedium 3.

### Versuch 1

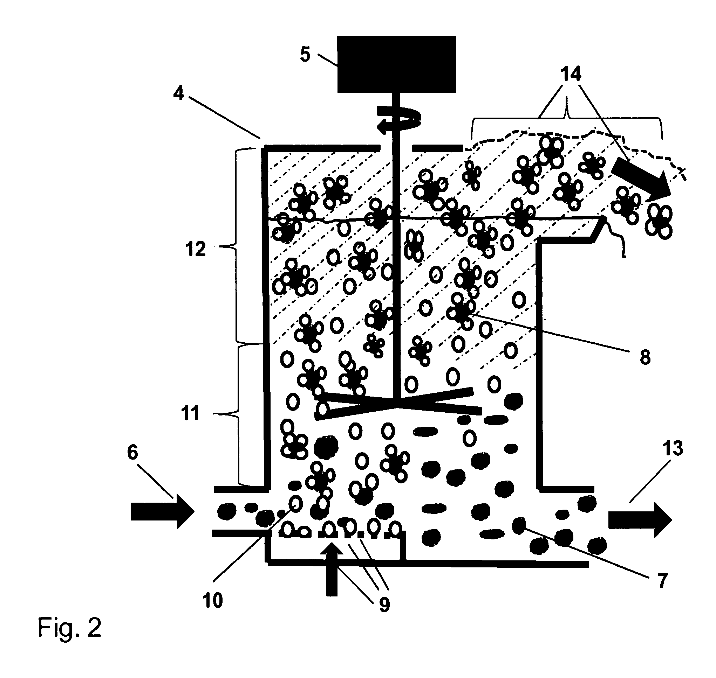

Ein auf dem Markt erhältliches Nutzfahrzeug-Ganzreifengranulat, enthaltend Naturkautschuk und Butyl-/Halobutylkautschuk mit einer Korngröße von 2 bis 4 mm wurde in einer Flotationszelle 4 gemäß Fig. 2 aufbereitet. Dazu wurde die Flotationszelle 4 mit einem Volumen von ca. 2 L mit einem elektrisch angetriebenen Rührer 5 mit Gleichstrommotor versehen. Die Drehgeschwindigkeit des Rührers 5 wurde über einen Transformator (230 V Wechselspannung / 0 - 14 V Gleichstrom) variabel geregelt. Die Drehgeschwindigkeit des Rührers 5 wurde so eingestellt, dass das über ein Rohr 6 mittels eines Wasserstromes von 2 - 4 L/min eingeschwemmte LKW-Ganzreifengranulat 7, 8 in der Flotationszelle 4 gleichmäßig dispergiert wurde.

Als Schäumer zum Austragen des Luftblasen anlagernden Granulats wurden dem Wasser handelsübliche Tenside in einer Konzentration von 0,1 Vol.-% bis 0,01 Vol.-% zugesetzt. Die Schaumstabilität war ausreichend und tragfähig genug um die Luftblasen anlagernden Granulate 8 oben aus der Flotationszelle 4 auszutragen.

Mittels eines Perlators 9 wurde die Luft mit Strömungsgeschwindigkeiten zwischen 1,8 und 4,5 L/min eingeblasen. Das Granulat 8 wurde von dem durch die aufsteigenden Luftlasen 10 erzeugten Aufwärtsbewegung des Wassers erfasst und durch den Rührer 5 gleichmäßig in der Blasenanlagerungszone 11 verwirbelt. Das Luftblasen 10 anlagernde Granulat 8 stieg durch die angelagerten Blasen nach oben in die Zone der Schaumbildung 12. Das Granulat 7, welches keine Luftblasen 10 anlagerte, konnte über ein in seinem Durchfluss regelbares Rohr 13 aus der Flotationszelle 4 abgezogen werden. Das Granulat 8 mit angelagerten Luftblasen 10 wurde vom aufsteigenden Schaum erfasst und trat mit diesem oben im Bereich 14 aus der Flotationszelle 4 aus. Mittels eines einfachen Schiebers konnte der Schaum in eine Vorlage gegeben werden. Mit einem einfachen Wasserstrahl konnte der Schaum entfernt und das tensidhaltige Wasser anteilig dem Wasser zum Einleiten des Granulatgemisches 7, 8 zugesetzt werden. Das aus dem Schaum erhaltene Granulat 8 und das vom Boden der Flotationszelle 4 abgezogene Granulat 7 wurden getrocknet und mittels IR-Spektroskopie analysiert. Auch vom Ausgangsmaterial wurde ein IR-Spektrum aufgenommen.

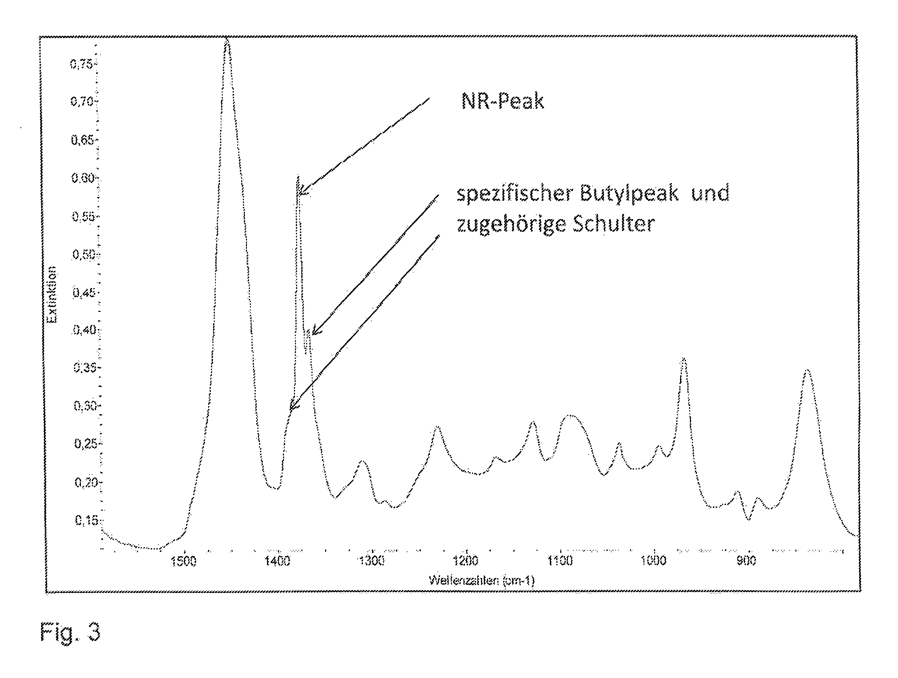

Fig. 3 zeigt das IR-Spektrum des Nutzfahrzeug-Ganzreifengranulats 7, 8 als Ausgangsmaterial. Der Peak bei ca. 1370 cm⁻¹ ist der Peak, der durch den Naturkautschukanteil hervorgerufen wird. Der Butylkautschukanteil zeigt sich im Peak bei ca. 1360 cm⁻¹ mit der dazugehörigen Schulter bei ca. 1380 cm⁻¹. Die Peakfläche des Butylkautschuks entspricht einem Butylkautschukanteil von bei ca. 10 phr. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

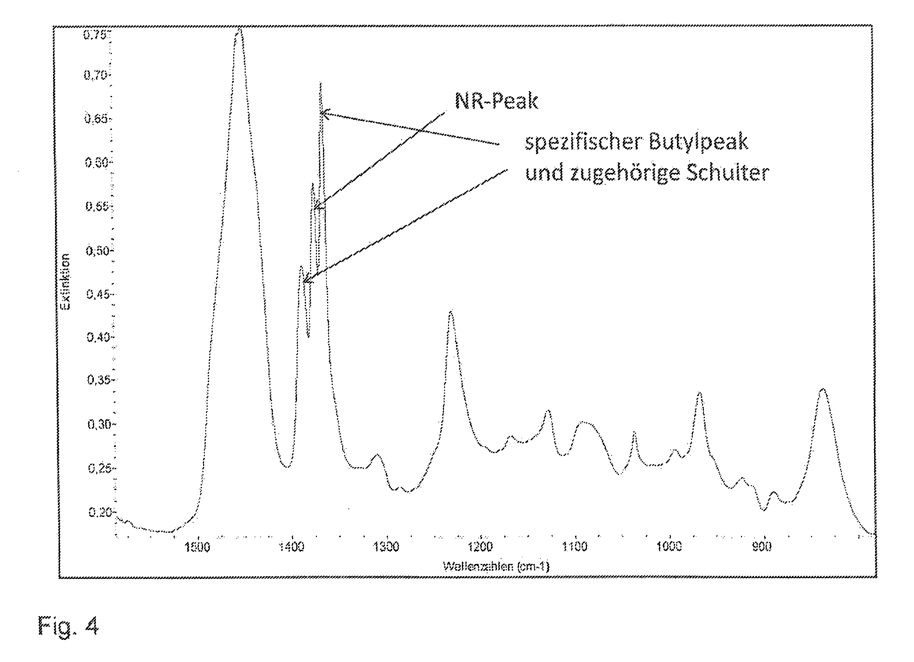

Fig. 4 zeigt das IR-Spektrum des in der Flotationszelle 4 verbliebenen Granulats 7. Aus diesem Spektrum wird ersichtlich, dass es sich dabei um ein deutlich an Butylkautschuk angereichertes und an Naturkautschuk abgereichertes Granulat handelt. Der Naturkautschukpeak ist kleiner geworden und die spezifischen Butylkautschukpeaks sind stark angestiegen entsprechend nun einem Butylkautschukanteil von mehr als 20 phr.

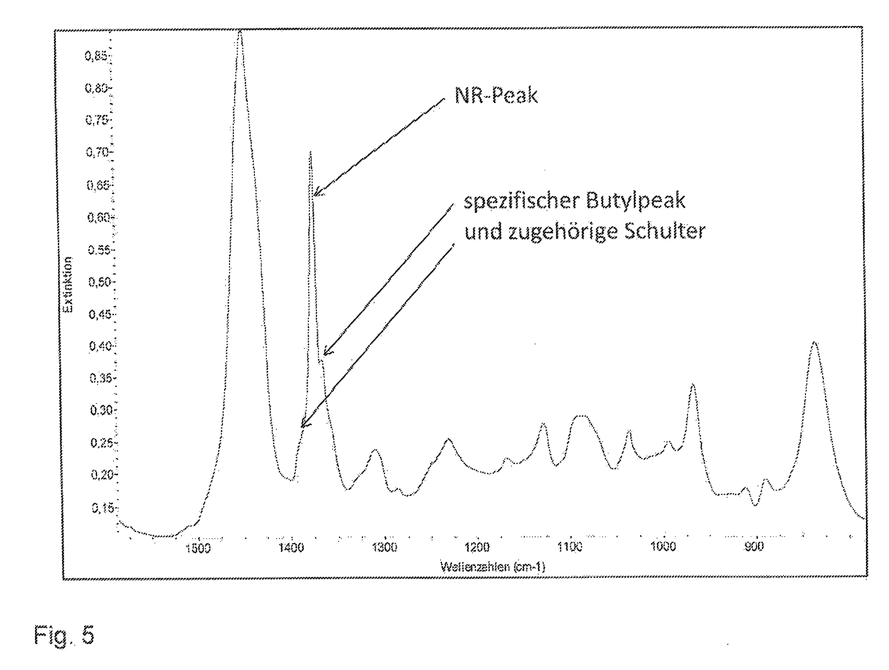

Fig. 5 zeigt das IR-Spektrum des ausgeschäumten Granulats 8. Der Peak, der charakteristisch für den Naturkautschuk ist, ist im Vergleich zum Ausgangsmaterial gemäß Fig. 3 deutlich größer geworden und die Peaks des Butylkautschuks sind deutlich kleiner geworden, entsprechend einem Butylkautschukanteil von weniger als 5 phr.

Die drei IR-Spektren belegen, dass es durch den nach dem erfindungsgemäßen Verfahren durchgeführten Versuch gelang, ein Ganzreifengranulat, welches Naturkautschuk und Butyl-/Halobutylkautschuk enthielt, aufzubereiten und die Kautschuktypen voneinander zu trennen. Das Granulat 8, welches Luftblasen anlagerte und ausgeschäumt wurde, enthielt mehr Naturkautschuk. Das Granulat 7, welches keine Luftblasen anlagerte und am Grund der Flotationszelle 4 verblieb, enthielt mehr Butyl-/Halobutylkautschuk.

Dass das Granulat, welches Luftblasen anlagert, das Granulat mit einem hohen Naturkautschukanteil ist, konnte auch in einem einfachen Versuch nachgewiesen werden, bei dem eine im Labor hergestellte reine Naturkautschukmischung nach der Vulkanisation in kleine Würfel mit ca. 4 - 5 mm Kantenlänge geschnitten wurde. Gleichzeitig wurde eine im Labor hergestellte Butyl-/Halobutylkautschukmischung (Halobutylkautschukgehalt > 80 phr) nach der Vulkanisation in kleine Dreiecke mit ca. 4 - 5 mm Schenkellänge und einer Dicke von 4 mm geschnitten. Die Dreiecke und Quadrate wurden vermischt und mit ihnen ein Flotationsversuch analog Versuch 1 durchgeführt. Die Würfel, enthaltend Naturkautschuk, lagerten Luftblasen an und trieben auf. Die Dreiecke, enthaltend Butyl-/Halobutylkautschuk lagerten keine Luftblasen an und verblieben auf dem Grund der Flotationszelle.

### Versuch 2

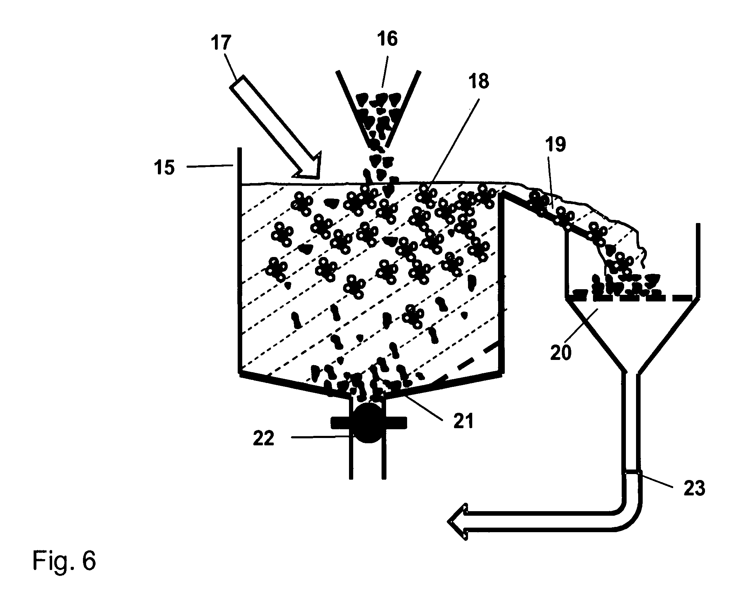

Ein auf dem Markt erhältliches Nutzfahrzeug-Ganzreifengranulat, enthaltend Naturkautschuk und Butyl-/Halobutylkautschuk mit einer Korngröße von 2 bis 4 mm wurde in einer Flotationszelle 15 gemäß Fig. 6 aufbereitet. In einer mehrere Liter fassenden Flotationszelle 15 konnte das Altreifengranulat 16 durch Einleiten eines intensiven lufthaltigen Wasserstrahles 17 unter guter Durchmischung der Luft im Wasser (Eindüsen) getrennt werden. Dabei lagerten sich Luftblasen an das naturkautschukhaltige Granulat 18 an und konnte mit dem oben austretenden Wasser durch den Überlauf 19 ausgeschwemmt und in einer Siebanlage 20 aufgefangen werden. Das butylkautschukhaltige Granulat 21 verblieb in der Flotationszelle 15 am Boden und konnte von dort entsprechend dessen Menge über ein Rohr mit Durchflussverschluss 22 abgelassen werden. Das durch das Sieb 20 ablaufende Wasser 23 konnte in einem Tank gesammelt und erneut als Prozesswasser zum Eindüsen eingesetzt werden.

Dieser einfache Flotationsprozess hat den Vorteil gegenüber einem Flotationsprozess unter Verwendung von Schäumern als Austragsmedium für das Naturkautschukgranulat, dass das Flotationswasser im Kreislauf geführt werden kann. Dadurch wird ein wasserarmer Flotationsprozess ermöglicht, der die natürliche Ressource Wasser erheblich schont.

In den beiden Versuchen wurden aufgereinigte Naturkautschuk- und Butyl-/Halobutylkautschukgranulate erhalten, die nach Regenerierprozessen als hochwertiges Material Kautschukmischungen, beispielsweise für Laufstreifen oder Innenseelen von Fahrzeugluftreifen, zudosiert werden können.

### Bezugszeichenliste

- 1 .............: Altreifengranulatpartikel
- 2 .............: Luftblasen
- 3 .............: Suspensionsmedium
- 4 .............: Flotationszelle
- 5 .............: Rührer
- 6 .............: Rohr
- 7 .............: Ganzreifengranulat, welches keine Luftblasen anlagert
- 8 .............: Ganzreifengranulat, welches Luftblasen anlagert
- 9 .............: Perlator
- 10............: Luftblasen
- 11............: Blasenanlagerungszone
- 12............: Zone der Schaumbildung
- 13............: Rohr
- 14 ............: Austrittsbereich
- 15 ............: Flotationszelle
- 16............: Altreifengranulat
- 17............: lufthaltiger Wasserstrahl
- 18 ............: naturkautschukhaltiges Granulat
- 19 ............: Überlauf
- 20............: Siebanlage
- 21............: butylkautschukhaltiges Granulat
- 22............: Rohr mit Durchflussverschluss
- 23 ............: ablaufendes Wasser

## Patentansprüche

1. Verfahren zur Aufbereitung von unterschiedliche Kautschuktypen enthaltenden Gummigranulaten (7, 8, 16) oder Gummipulver, wobei die Aufbereitung mittels Flotation erfolgt, wobei Flotation das auch als Schwimm auf bereitung bezeichnete Trennverfahren zur Aufbereitung von gemahlenen, freinkörnigen und granulatartigen Feststoffen aufgrund der unterschiedlichen Oberflächen benetzbarkeit der Granulate/Partikel ist.

2. Verfahren nach Anspruch 1, **dadurch gekennzeichnet, dass** das Gummigranulat (7, 8, 16) oder Gummipulver Naturkautschuk und Butylkautschuk bzw. Halobutylkautschuk enthält.

3. Verfahren nach Anspruch 1 oder 2, **dadurch gekennzeichnet, dass** das Gummigranulat (7, 8, 16) oder Gummipulver durch Zerkleinern von ganzen Altreifen erhalten wurde.

4. Verfahren nach Anspruch 3, **dadurch gekennzeichnet, dass** das Gummigranulat (7, 8, 16) oder Gummipulver durch Zerkleinern von ganzen Nutzfahrzeugaltreifen erhalten wurde.

5. Verfahren nach zumindest einem der Ansprüche 1 bis 4, **dadurch gekennzeichnet, dass** das Gummigranulat (7, 8, 16) oder Gummipulver eine Korngröße von 50 bis 3 mesh aufweist.

6. Verfahren nach zumindest einem der Ansprüche 1 bis 5, **dadurch gekennzeichnet, dass** die Aufbereitung in zumindest einer Flotationszelle (4) erfolgt.

7. Verfahren nach Anspruch 6, **dadurch gekennzeichnet, dass** die Aufbereitung in mehreren hintereinander geschalteten Flotationszellen (4) erfolgt.

8. Verfahren nach zumindest einem der Ansprüche 1 bis 7, **dadurch gekennzeichnet, dass** für die Flotation das Gummigranulat (7, 8, 16) oder Gummipulver in Wasser suspendiert wird.

9. Verfahren nach zumindest einem der Ansprüche 1 bis 8, **dadurch gekennzeichnet, dass** als Gas für die Flotation Luft eingesetzt wird.

10. Verfahren nach zumindest einem der Ansprüche 1 bis 9, **dadurch gekennzeichnet, dass** das aufbereitete Gummigranulat (7, 8, 16) oder Gummipulver getrocknet wird.

11. Verfahren nach Anspruch 10, **dadurch gekennzeichnet, dass** das aufbereitete und getrocknete Gummigranulat (7, 8, 16) oder Gummipulver regeneriert wird.

12. Verfahren gemäß Anspruch 1, wobei das aufbereitete Gummigranulat (7, 8, 16) oder Gummipulver als Zuschlagstoff für Kautschukmischungen, insbesondere Reifenkautschukmischungen, verwendet wird.

## Claims

1. Method for processing granulated rubbers (7, 8, 16) or powdered rubbers containing different rubber types, the processing being effected by means of flotation, flotation being the separation process, also referred to as float processing, for processing of ground, fine particulate and granulated solids on the basis of the different surface wettability of the granules/particles.

2. Method according to Claim 1, **characterized in that** the granulated rubber (7, 8, 16) or powdered rubber comprises natural rubber and butyl rubber or halobutyl rubber.

3. Method according to Claim 1 or 2, **characterized in that** the granulated rubber (7, 8, 16) or powdered rubber has been obtained by comminuting whole used tires.

4. Method according to Claim 3, **characterized in that** the granulated rubber (7, 8, 16) or powdered rubber has been obtained by comminuting whole used utility vehicle tires.

5. Method according to at least one of Claims 1 to 4, **characterized in that** the granulated rubber (7, 8, 16) or powdered rubber has a particle size of 50 to 3 mesh.

6. Method according to at least one of Claims 1 to 5, **characterized in that** the processing is effected in at least one flotation cell (4).

7. Method according to Claim 6, **characterized in that** the processing is effected in a plurality of flotation cells (4) connected in series.

8. Method according to at least one of Claims 1 to 7, **characterized in that** the granulated rubber (7, 8, 16) or powdered rubber is suspended in water for the flotation.

9. Method according to at least one of Claims 1 to 8, **characterized in that** the gas used for the flotation is air.

10. Method according to at least one of Claims 1 to 9, **characterized in that** the processed granulated rubber (7, 8, 16) or powdered rubber is dried.

11. Method according to Claim 10, **characterized in that** the processed and dried granulated rubber (7, 8, 16) or powdered rubber is regenerated.

12. Method according to Claim 1, the processed granulated rubber (7, 8, 16) or powdered rubber being used as an aggregate for rubber mixtures, especially tire rubber mixtures.

## Revendications

1. Procédé de préparation de granulats de caoutchoucs (7, 8, 16) ou de poudres de caoutchouc contenant différents types de caoutchoucs, la préparation ayant lieu par flottation, la flottation étant le procédé de séparation également nommé préparation par flottation pour la préparation de solides broyés, à grains fins et granulaires à partir de la mouillabilité de surface différente des granulats/particules.

2. Procédé selon la revendication 1, **caractérisé en ce que** le granulat de caoutchouc (7, 8, 16) ou la poudre de caoutchouc contient du caoutchouc naturel et du caoutchouc de butyle ou du caoutchouc d'halobutyle.

3. Procédé selon la revendication 1 ou 2, **caractérisé en ce que** le granulat de caoutchouc (7, 8, 16) ou la poudre de caoutchouc a été obtenu par broyage de pneus usagés entiers.

4. Procédé selon la revendication 3, **caractérisé en ce que** le granulat de caoutchouc (7, 8, 16) ou la poudre de caoutchouc a été obtenu par broyage de pneus usagés entiers de véhicules utilitaires.

5. Procédé selon au moins l'une quelconque des revendications 1 à 4, **caractérisé en ce que** le granulat de caoutchouc (7, 8, 16) ou la poudre de caoutchouc présente une taille de grain de 50 à 3 mesh.

6. Procédé selon au moins l'une quelconque des revendications 1 à 5, **caractérisé en ce que** la préparation a lieu dans au moins une cellule de flottation (4).

7. Procédé selon la revendication 6, **caractérisé en ce que** la préparation a lieu dans plusieurs cellules de flottation (4) connectées en série.

8. Procédé selon au moins l'une quelconque des revendications 1 à 7, **caractérisé en ce que** la flottation du granulat de caoutchouc (7, 8, 16) ou de la poudre de caoutchouc est suspendue dans de l'eau.

9. Procédé selon au moins l'une quelconque des revendications 1 à 8, **caractérisé en ce que** de l'air est utilisé en tant que gaz pour la flottation.

10. Procédé selon au moins l'une quelconque des revendications 1 à 9, **caractérisé en ce que** le granulat de caoutchouc (7, 8, 16) ou la poudre de caoutchouc préparé est séché.

11. Procédé selon la revendication 10, **caractérisé en ce que** le granulat de caoutchouc (7, 8, 16) ou la poudre de caoutchouc préparé et séché est régénéré.

12. Procédé selon la revendication 1, dans lequel le granulat de caoutchouc (7, 8, 16) ou la poudre de caoutchouc préparé est utilisé en tant qu'additif pour mélanges de caoutchoucs, notamment mélanges de caoutchoucs pour pneus.
